# FASCICULE DE BREVET EUROPEEN

(11) **EP 1 699 669 B1**
(45) Date de publication et mention de la délivrance du brevet: **18.02.2009**
(21) Numéro de dépôt: 04816407.3
(22) Date de dépôt: 13.12.2004
(51) Int. Cl.: B60T 7/10, F16D 65/092

(54) **CONTROLE DU SERRAGE D' UN FREIN DE PARKING AUTOMATIQUE POUR VEHICULE AUTOMOBILE.**
ÜBERRÜFUNG DES FESTZIEHENS EINER AUTOMATISCHEN FESTSTELLBREMSE IN EINEM KRAFTFAHRZEUG
CHECKING THE TIGHTENING OF AN AUTOMATIC PARKING-BRAKE IN A MOTOR VEHICLE

(30) Priorité: 17.12.2003 FR 0314798
(43) Date de publication de la demande: 13.09.2006
(73) Titulaire: ROBERT BOSCH GMBH, 70442 Stuttgart (DE)
(72) Inventeur: HURWIC, Aleksander, Bosch Systèmes de Freinage, F-93700 DRANCY (FR)
(74) Mandataire: Hurwic, Aleksander Wiktor
(86) Numéro de dépôt international: PCT/FR2004/003271
(87) Numéro de publication internationale: WO 2005/058661

(56) Documents cités:
- DE-A- 4 024 811
- DE-A- 10 021 601
- DE-A- 19 526 645

## Description

L'invention concerne un dispositif et un procédé de contrôle du serrage d'un frein de parking automatique d'un véhicule automobile.

Les freins de parking ou de stationnement qui équipent traditionnellement les véhicules automobiles sont des freins "à main" qui comprennent un levier relié par un câble à un mécanisme de serrage de deux des freins du véhicule.

Pour le serrage d'un tel frein de parking, le conducteur d'un véhicule tire sur le levier de commande et ressent plus ou moins une force de serrage des freins, à partir de la résistance au déplacement du levier, notamment en fin de course. Si le véhicule est garé sur une pente et commence à se déplacer, cela amène le conducteur à tirer davantage sur le levier pour serrer les freins plus fortement et immobiliser le véhicule. C'est toujours au conducteur du véhicule qu'il incombe de serrer le frein de parking ou de stationnement et de le serrer correctement.

Certains.modèles de véhicules sont actuellement équipés de freins de parking automatique comprenant des moyens motorisés de serrage de deux des freins du véhicule, ces moyens étant commandés par exemple par un contacteur électrique. L'actionnement de ce contacteur par le conducteur provoque le serrage de deux des freins du véhicule, un du côté droit et un du côté gauche. Si, pour une raison quelconque, l'un de ces freins n'est pas serré correctement, le conducteur n'a pas de moyen direct ou indirect de le constater, sauf si le véhicule est garé sur une pente et commence à se déplacer. Il est donc nécessaire de prévoir un moyen de contrôle du serrage correct des freins de parking automatique des véhicules automobiles.

Il est envisageable pour cela de monter des jauges de contrainte dans un frein du véhicule pour vérifier le serrage correct de ce frein à partir des signaux fournis par les jauges de contrainte, voir DE-A-100 21 601. Toutefois, une telle solution serait trop coûteuse en raison du prix relativement élevé des jauges de contrainte.

L'invention a notamment pour but d'apporter une solution simple, satisfaisante et économique au problème du contrôle du serrage de ces freins de parking.

Elle propose à cet effet un dispositif de contrôle du serrage d'un frein de parking automatique de véhicule automobile, ce frein de parking comprenant des moyens motorisés de serrage d'au moins une plaquette de frein sur un disque de frein d'une roue du véhicule, le dispositif étant caractérisé en ce qu'il, comprend des moyens de mesure d'une propriété physique de la plaquette, dont la valeur varie en fonction de la force de serrage de la plaquette sur le disque de frein.

L'invention présente l'avantage d'utiliser une propriété de la plaquette de frein pour vérifier si la force de serrage du frein correspondant est suffisante, ce qui se traduit par une réalisation simple et économique du dispositif de contrôle.

Avantageusement, ce dispositif comprend des moyens de comparaison des valeurs mesurées de ladite propriété à des valeurs pré-enregistrées en mémoire, ces moyens de comparaison étant reliés à des moyens de commande du serrage du frein de parking. Cela permet de resserrer ce frein automatiquement en cas de besoin.

Dans un premier mode de réalisation de l'invention, cette propriété physique est une grandeur électrique liée à la conductivité électrique de la plaquette, et en particulier de la garniture de friction de cette plaquette.

Il suffit alors d'une alimentation électrique et d'un appareil de mesure du type voltmètre par exemple, qui sont reliés à la plaquette de frein par des conducteurs électriques pour mesurer la conductivité de la garniture de friction.

Dans une forme particulière de l'invention, la garniture de friction de la plaquette de frein est réalisée en un matériau traditionnel auquel on a ajouté un composant électriquement conducteur, tel par exemple que du cuivre ou du noir de carbone, qui est réparti ou intégré dans le matériau de la garniture de friction de telle sorte que la conductivité ou résistivité électrique de celle-ci varie en fonction de la force de serrage qui lui est appliquée.

Dans une variante de réalisation de l'invention, la plaquette de frein comporte un témoin d'usure qui est formé par un élément électriquement conducteur noyé dans la garniture de friction et relié par un conducteur électrique à un circuit d'alimentation d'un voyant lumineux lorsque le témoin d'usure vient au contact du disque de frein, par suite de l'usure de la garniture de friction.

Dans ce cas, l'invention prévoit d'ajouter un composant électriquement conducteur dans le matériau de la garniture de friction, uniquement dans la partie de cette garniture qui est comprise entre le témoin d'usure et le support métallique sur lequel la garniture est fixée.

Cette variante de réalisation présente l'avantage que la grandeur physique mesurée lors du serrage de la garniture de friction est indépendante du degré d'usure de cette garniture.

Dans un autre mode de réalisation de l'invention, la propriété physique mesurée de la plaquette de frein est une grandeur acoustique, telle que l'impédance acoustique de la plaquette de frein ou de sa garniture de friction.

Dans ce cas, on associe un émetteur-récepteur d'une onde acoustique appropriée à la plaquette de frein ou à la garniture de friction et on mesure les variations du signal de sortie du récepteur pour déterminer et vérifier la force de serrage du frein correspondant.

L'invention propose également un procédé de contrôle du serrage d'un frein de parking automatique de véhicule automobile, ce frein de parking comprenant des moyens motorisés de serrage d'au moins une plaquette de frein sur un disque de frein d'une roue du véhicule, caractérisé en ce qu'il consiste essentiellement, après une commande de serrage du frein de parking, à mesurer une propriété physique de la plaquette de frein, cette propriété variant en fonction de la force de serrage de cette plaquette, à comparer la mesure à une valeur préenregistrée, et si la mesure est inférieure à la valeur préenregistrée, à commander à nouveau le serrage du frein de parking et/ou à émettre un signal à l'attention du conducteur du véhicule.

De préférence, le procédé selon l'invention consiste à mesurer ladite propriété physique de la plaquette à des instants différents après une commande de serrage du frein de parking, à comparer les valeurs mesurées à des valeurs pré-enregistrées correspondantes et à commander à nouveau le serrage du frein de parking si au moins l'une des mesures ou la variation de la valeur entre les mesures est inférieure à la valeur préenregistrée correspondantes.

On peut ainsi, en particulier, mesurer une valeur initiale de la propriété physique de la plaquette de frein, à l'instant où un ordre de serrage du frein de parking automatique a été donné par le conducteur du véhicule, puis mesurer cette propriété quand les freins sont serrés par les moyens motorisés, et mesurer à nouveau cette propriété après blocage mécanique des freins et retour au repos des moyens motorisés.

Cela permet de tenir compte d'une relaxation mécanique des freins lorsque les moyens motorisés de serrage ne sont plus activés et de vérifier que le frein de parking est encore correctement serré après cette relaxation mécanique. Avantageusement, on peut également mesurer à nouveau la propriété physique de la plaquette de frein un certain temps après le serrage du frein de parking, pour permettre un refroidissement des freins et leur retour à une température normale ou voisine de la normale.

Cela permet en particulier de resserrer le frein de parking automatique si nécessaire, lorsqu'il a été commandé par le conducteur du véhicule après un freinage intensif ayant provoqué un échauffement important et une dilatation thermique correspondante des freins du véhicule.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un exemple de réalisation d'un dispositif de contrôle selon l'invention, équipant un frein à disque de véhicule automobile ;
- la figure 2 représente schématiquement une variante de réalisation de ce dispositif ;
- la figure 3 est un graphe représentant la variation de l'effort subi par une plaquette de frein en fonction du temps lors de l'actionnement d'un frein de parking automatique.

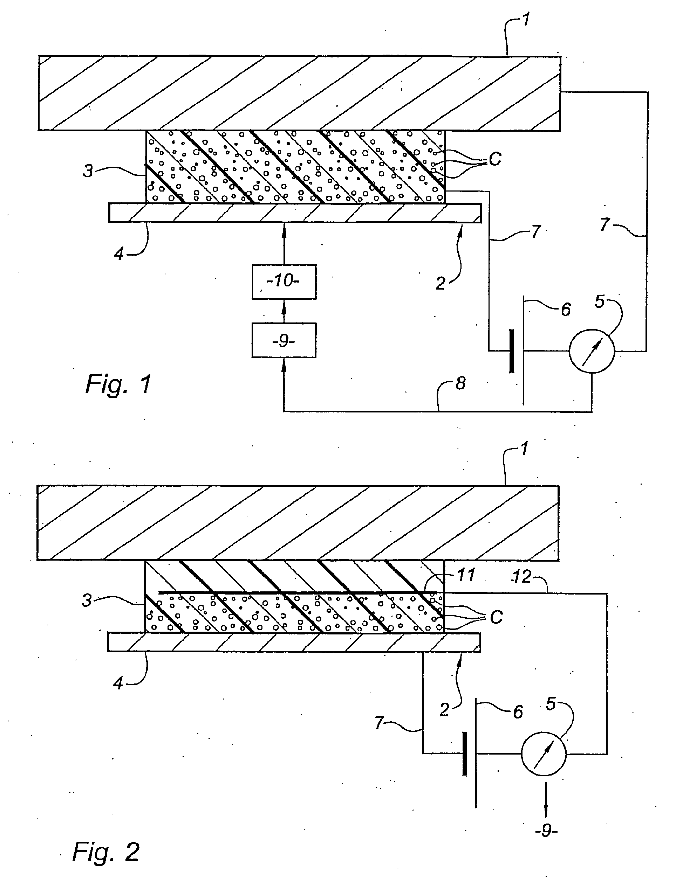

En figure 1, la référence 1 désigne un disque de frein, qui est solidaire d'une roue (non représentée) d'un véhicule automobile et qui est destiné à être serré entre deux plaquettes de frein 2 (dont une seule est représentée en figure 1), qui sont sollicitées en appui sur les faces opposées du disque 1 par un frein hydraulique dans un montage d'un type connu.

Chaque plaquette de frein 2 comprend une garniture 3 réalisée en matériau de friction et fixée, par exemple par collage, sur un support métallique 4.

Selon l'invention, ce matériau de friction comprend également un composant électriquement conducteur C par exemple sous forme de poudre ou de grains, par exemple de cuivre ou de noir de carbone, ou des grains d'éléments isolants revêtus d'une couche conductrice qui est réparti dans la garniture de friction 3 de telle sorte que la résistivité ou conductivité électrique de celle-ci varie de façon sensible en fonction de la force de compression qui lui est appliquée lors du serrage du frein correspondant. Cette répartition est avantageusement homogène.

Cette conductivité ou résistivité électrique peut être mesurée au moyen du dispositif représenté en figure 1, qui comprend essentiellement un appareil de mesure 5 du type voltmètre par exemple, et un circuit d'alimentation électrique 6 qui peut être constitué par la batterie électrique du véhicule automobile ou par un circuit d'alimentation particulier alimenté à partir de la batterie du véhicule.

L'appareil de mesure 5 et le circuit d'alimentation 6 sont reliés entre eux, à la garniture de friction 3 de la plaquette de frein et au disque de frein 1 par des conducteurs électriques 7 comme représenté pour former un circuit fermé de sorte que le signal de mesure fourni par l'appareil 5 varie comme la conductivité ou la résistivité électrique de la garniture de friction 3, qui varie elle-même avec la force avec laquelle les garnitures des plaquettes de frein sont appliquées sur le disque 1. Typiquement, la résistivité diminue avec la compression.

Le signal de sortie de l'appareil 5 est appliqué à une entrée de moyens 9 avantageusement numériques comprenant des valeurs pré-enregistrées en mémoire et des moyens de comparaison du signal 8 à ces valeurs préenregistrées.

La sortie des moyens 9 est reliée à des moyens 10 de commande du serrage du frein de parking.

En variante, l'ensemble formé par l'appareil de mesure 5 et le circuit d'alimentation 6 peut être relié, non pas au disque de frein 1 comme représenté, mais à la masse électrique du véhicule.

La figure 2 représente une variante de réalisation de l'invention dans laquelle la garniture 3 de la plaquette de frein 2 est équipée d'un témoin d'usure 11, formé par un conducteur électrique noyé dans le matériau de la garniture de friction 3 et destiné à venir au contact du disque de frein 1 lorsque l'usure de la garniture de friction 3 atteint une valeur prédéterminée par exemple égale à un cinquième de l'épaisseur de la garniture. Ce témoin d'usure 11 est relié à un conducteur électrique 12 extérieur à la garniture de friction 3, ce conducteur 12 étant lui-même relié à des moyens de signalisation comprenant en général un voyant lumineux dont l'allumage indique au conducteur du véhicule qu'il faut procéder au remplacement des plaquettes de frein.

Selon l'invention, seule la partie de la garniture de friction 3 qui se trouve entre le support métallique 4 et le témoin d'usure 11 comprend un matériau électriquement conducteur C en grains ou en poudre de sorte que c'est la conductivité ou résistivité électrique de cette partie de la garniture 3 qui sera mesurée lors du contrôle du serrage du frein.

Pour cela, le dispositif de contrôle selon l'invention comprenant l'appareil de mesure 5 et le circuit d'alimentation électrique 6 déjà décrits est relié par un conducteur électrique 7 au support métallique 4 de la plaquette de frein et au conducteur métallique 12 du témoin d'usure 11.

Comme dans le mode de réalisation de la figure 1, la sortie de l'appareil de mesure 5 est reliée aux moyes 9 de comparaison des valeurs mesurées à des valeurs préenregistrées. En variante, on mesure l'impédance électrique de la garniture à une ou plusieurs fréquences d'un courant alternatif et ou en haute fréquence.

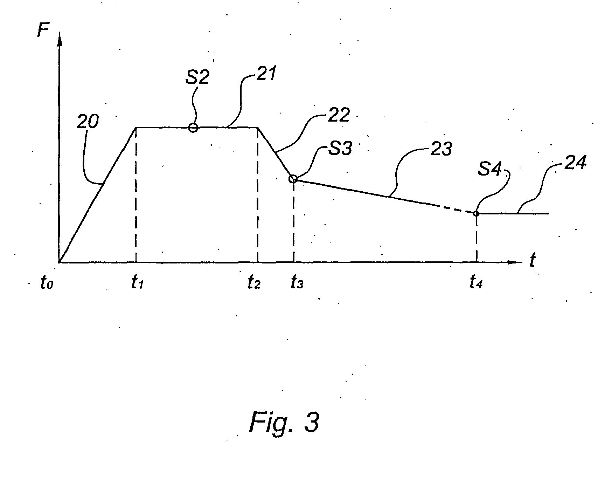

Le fonctionnement du dispositif selon l'invention va maintenant être décrit en référence à la figure 3.

Cette figure est un graphe représentant la courbe de variation en fonction du temps t de l'effort appliqué à la garniture de friction 3 lors du serrage du frein de parking.

Cette courbe comprend une première partie 20 de serrage progressif du frein, entre l'instant t0 d'actionnement de la commande du frein de parking par le conducteur du véhicule et l'instant t1 où la force de serrage du frein atteint une valeur maximale. Cette première partie 20 de la courbe est suivie d'une deuxième partie 21 qui est un palier correspondant au maintien de la force maximale de serrage entre les instants t1 et t2, l'instant t2 correspondant à la fin de l'application de la force de serrage exercée par le circuit hydraulique du frein après blocage mécanique du frein en position serrée.

L'intervalle de temps t1 - t2 peut être relativement court, par exemple de l'ordre de la seconde.

La deuxième partie de la courbe est suivie d'une troisième partie 22 entre les instants t2 et t3 qui correspond à une relaxation mécanique du frein, l'effort F subi par la garniture 3 diminuant légèrement entre une valeur correspondant à la force de serrage par le frein hydraulique et une valeur correspondant à la force de serrage maintenue grâce au blocage mécanique du frein en position serrée.

La troisième partie 22 de la courbe est suivie d'une quatrième partie 23 qui correspond à une éventuelle relaxation thermique du frein et qui peut être plus ou moins accentuée en fonction de la température du frein au moment de la commande du frein de parking automatique. Cette quatrième partie 23 de la courbe entre les instants t3 et t4 correspond donc au retour du frein à une température normale, la force de serrage à l'instant t4 étant inférieure à la force de serrage à l'instant t3 en raison de la contraction due au refroidissement des composants du frein. La cinquième partie 24 de la courbe après l'instant t4 est un palier de valeur constante de l'effort F.

On procède à un étalonnage du dispositif selon l'invention, en enregistrant des valeurs S1, S2, S3 et S4 du signal de sortie de l'appareil de mesure 5 qui correspondent aux différentes parties de la courbe représentée en figure 3, dans le cas d'un serrage correct du frein de parking automatique. La valeur S1 est une valeur initiale mesurée à l'instant t0 de commande du serrage du frein de parking automatique, la valeur S2 est enregistrée entre les instants t1 et t2; la valeur S3 est enregistrée à l'instant t3 à la fin de la relaxation mécanique du frein et la valeur S4 est enregistrée à l'instant t4 pendant ou après refroidissement du frein (par exemple 30 minutes après commande du frein de parking).

Ensuite, le contrôle du serrage correct du frein de parking automatique consiste à comparer le signal de sortie de l'appareil de mesure 5 à la valeur enregistrée S1 à l'instant t0, puis à la valeur enregistrée S2, à un instant compris entre t1 et t2, puis à la valeur enregistrée S3, à un instant correspondant à l'instant t3 et enfin à la valeur enregistrée S4 à un instant correspondant à l'instant t4 (si aucune commande de desserrage du frein de parking automatique n'a été donnée entre-temps par le conducteur du véhicule).

Si l'une des valeurs du signal de sortie de l'appareil de mesure 5 est inférieure aux valeurs enregistrées S2, S3 et S4 de façon significative, c'est-à-dire si l'écart entre le signal de sortie de l'appareil 5 et ces valeurs enregistrées est supérieur à une valeur prédéterminée, on peut en déduire que le serrage du frein de parking automatique n'est pas suffisant et les moyens 9 commandent à nouveau le serrage de ce frein de parking. Simultanément, un signal peut être émis à l'attention du conducteur du véhicule. La nouvelle commande du frein de parking permet par exemple de resserrer ce frein si la diminution de la force de serrage pendant l'intervalle de refroidissement t3 - t4 a été relativement importante.

Au lieu de comparer les valeurs du signal de sortie de l'appareil 5 aux valeurs pré-enregistrées, on peut au préalable calculer des différences et/ou des rapports entre ces mesures et les comparer à des différences et/ou des rapports semblables des valeurs pré-enregistrées, pour s'affranchir de l'influence de certains paramètres tels que la température ambiante ou l'usure des plaquettes 2.

Dans le mode de réalisation préféré, on compare les valeurs S2-S1, S2-S3, S2-S4, S3-S4 et/ou S3-S1 aux valeurs correspondantes prédéterminées pour déterminer si les plaquettes 2 sont correctement appliquées sur le disque 1. Si la différence S3-S4 dépasse un seuil prédéterminé, on considère que l'on assiste à une relaxation thermique inacceptable (« roll away » en terminologie anglo-saxonne) et le calculateur du circuit de freinage réapplique le frein de parking par exemple en mettant en marche une pompe haute pression du groupe hydraulique ESP du système de freinage.

Dans une variante de réalisation de l'invention, on mesure une autre propriété physique de la plaquette de frein et/ou de sa garniture de friction, par exemple son impédance acoustique au moyen d'un capteur formant avantageusement un émetteur et un récepteur, tel qu'un capteur ultrasonore par exemple.

## Revendications

1. Dispositif de contrôle du serrage d'un frein de parking automatique de véhicule automobile, comprenant des moyens motorisés (10) de serrage d'au moins une plaquette de frein (2) sur un disque de frein (1), **caractérisé en ce qu'**il comprend des moyens (5) de mesure d'une propriété physique de la plaquette (2) dont la valeur varie en fonction de la force de serrage de la plaquette sur le disque de frein (1).

2. Dispositif selon la revendication 1, **caractérisé en ce qu'**il comprend des moyens (9) de comparaison des valeurs mesurées de ladite propriété avec des valeurs préenregistrées, ces moyens de comparaison (9) étant reliés à des moyens (10) de commande de serrage du frein.

3. Dispositif selon la revendication 1 ou 2, **caractérisé en ce que** ladite propriété physique est une grandeur électrique liée à la conductivité ou résistivité de la plaquette de frein (2) et en particulier de sa garniture de friction (3).

4. Dispositif selon l'une des revendications précédentes, **caractérisé en ce que** le matériau de la garniture de friction (3) de la plaquette (2) comprend une addition d'un composant électriquement conducteur (C) en grains ou en poudre, tel par exemple que du cuivre ou du noir de carbone.

5. Dispositif selon l'une des revendications 1 à 3, **caractérisé en ce que** la garniture de friction (3) de la plaquette de frein (2) comprend un témoin d'usure (11) formé d'un élément électriquement conducteur noyé dans la garniture de friction (3) et **en ce qu'**un composant électriquement conducteur (C) en grains ou en poudre est ajouté au matériau de la garniture de friction (3), uniquement entre le témoin d'usure (11) et un support (4) sur lequel est fixée la garniture de friction (3).

6. Dispositif selon l'une des revendications précédentes, **caractérisé en ce qu'**il comprend un appareil de mesure (5), tel qu'un voltmètre par exemple, et un circuit d'alimentation électrique (6), reliés électriquement à la garniture de friction (3) de la plaquette de frein (2) et à un élément métallique tel que le disque de frein (1) ou un support (4) de la garniture de friction (3), ou à la masse électrique du véhicule.

7. Procédé de contrôle de serrage d'un frein de parking automatique de véhicule automobile comprenant des moyens motorisés de serrage d'au moins une plaquette de frein (2) sur un disque de frein (1) monté sur une roue du véhicule, **caractérisé en ce qu'**il consiste essentiellement, après une commande de serrage du frein de parking automatique, à mesurer une propriété physique de la plaquette de frein variant en fonction de la force de serrage de cette plaquette sur le disque de frein (1), à comparer la mesure à une valeur préenregistrée et, si la mesure est inférieure à la valeur préenregistrée, à commander à nouveau le serrage du frein de parking ét/ou. à émettre un signal à l'attention du conducteur du véhicule.

8. Procédé selon la revendication 7, **caractérisé en ce qu'**il consiste à mesurer ladite propriété de la plaquette de frein (2) à des instants différents après une commande de serrage du frein de parking, à comparer des valeurs mesurées à des valeurs pré-enregistrées correspondantes et à commander à nouveau le serrage du frein de parking si au moins l'une des valeurs mesurées est inférieure à la valeur préenregistrée correspondante.

9. Procédé selon la revendication 8, **caractérisé en ce qu'**il consiste à mesurer une valeur initiale de ladite propriété avant serrage du frein de parking, une autre valeur de cette propriété pendant le serrage du frein par les moyens motorisés de serrage, une autre valeur de cette propriété après blocage mécanique du frein et retour des moyens de serrage en position de repos.

10. Procédé selon la revendication 9, **caractérisé en ce qu'**il comporte en outre une étape ultérieure de mesure de ladite propriété en cours de refroidissement du frein.

11. Procédé selon la revendication 8, 9 ou 10, **caractérisé en ce qu'**il consiste à comparer des différences et/ou des rapports des valeurs mesurées de ladite propriété à des différences et/ou des rapports des valeurs pré-enregistrées correspondantes.

12. Procédé selon l'une des revendications 8 à 11, **caractérisé en ce qu'**il consiste à mesurer une grandeur électrique liée à la conductivité ou résistivité électrique de la plaquette de frein (2) ou de sa garniture de friction (3).

## Claims

1. Device for monitoring the application of a motor vehicle automatic parking brake, comprising driven means (10) of applying at least one brake pad (2) to a brake disk (1), **characterized in that** it comprises measurement means (5) for measuring a physical property of the pad (2), the value of which varies as a function of the force with which the pad is applied to the brake disk (1).

2. Device according to Claim 1, **characterized in that** it comprises comparison means (9) for comparing the measured values of said property with prerecorded values, these comparison means (9) being connected to means (10) for commanding application of the brake.

3. Device according to Claim 1 or 2, **characterized in that** said physical property is an electrical magnitude associated with the conductivity or resistivity of the brake pad (2) and in particular of its friction lining (3).

4. Device according to one of the preceding claims, **characterized in that** the material of the friction lining (3) of the pad (2) contains an addition of an electrically conducting component (C) in granular or powder form, such as copper or carbon black for example.

5. Device according to one of Claims 1 to 3, **characterized in that** the friction lining (3) of the brake pad (2) comprises a wear indicator (11) formed of an electrically conducting element embedded in the friction lining (3) and **in that** an electrically conducting component (C) in granular or powder form is added to the material of the friction lining (3) solely between the wear indicator (11) and a backing (4) to which the friction lining (3) is attached.

6. Device according to one of the preceding claims, **characterized in that** it comprises a measurement apparatus (5), such as a volt meter for example, and an electrical supply circuit (6) which are electrically connected to the friction lining (3) of the brake pad (2) and to a metal component such as the brake disk (1) or a backing (4) of the friction lining (3) or to the vehicle electrical ground.

7. Method for monitoring application of a motor vehicle automatic parking brake comprising driven means of applying at least one brake pad (2) to a brake disk (1) mounted on a wheel of the vehicle, **characterized in that** it essentially consists, following a command to apply the automatic parking brake, in measuring a physical property of the brake pad that varies as a function of the force with which this pad is applied to the brake disk (1), in comparing the measurement with a prerecorded value and, if the measurement is below the prerecorded value, in once again commanding the application of the parking brake and/or in emitting a signal for the attention of the driver of the vehicle.

8. Method according to Claim 7, **characterized in that** it consists in measuring said property of the brake pad (2) at different instants following a command to apply the parking brake, in comparing measured values with corresponding prerecorded values and in once again commanding the application of the parking brake if at least one of the measured values is below the corresponding prerecorded value.

9. Method according to Claim 8, **characterized in that** it consists in measuring an initial value of said property before the parking brake is applied, another value of this property while the brake is being applied by the driven application means, another value of this property following mechanical locking of the brake and return of the application means to the position of rest.

10. Method according to Claim 9, **characterized in that** it further involves a subsequent step of measuring said property as the brake cools.

11. Method according to Claim 8, 9 or 10, **characterized in that** it consists in comparing differences and/or ratios of the measured values of said property with differences and/or ratios of the corresponding prerecorded values.

12. Method according to one of Claims 8 to 11, **characterized in that** it consists in measuring an electrical magnitude associated with the conductivity or electrical resistivity of the brake pad (2) or of its friction lining (3).

## Patentansprüche

1. Vorrichtung zur Kontrolle des Anziehens einer automatischen Kraftfahrzeugfeststellbremse, mit motorisch angetriebenen Mitteln (10) zum Andrücken mindestens eines Bremsklotzes (2) an eine Bremsscheibe (1), **dadurch gekennzeichnet, dass** sie Mittel (5) zur Messung einer physikalischen Eigenschaft des Bremsklotzes (2) aufweist, deren Wert sich in Abhängigkeit von der Kraft des Andrückens des Bremsklotzes an die Bremsscheibe (1) ändert.

2. Vorrichtung nach Anspruch 1, **dadurch gekennzeichnet, dass** sie Mittel (9) zum Vergleichen der gemessenen Werte der Eigenschaft mit vorgespeicherten Werten aufweist, wobei diese Vergleichsmittel (9) mit Mitteln (10) zur Steuerung des Anziehens der Bremse verbunden sind.

3. Vorrichtung nach Anspruch 1 oder 2, **dadurch gekennzeichnet, dass** die physikalische Eigenschaft eine elektrische Größe ist, die mit der Leitfähigkeit oder dem spezifischen Widerstand des Bremsklotzes (2) und insbesondere seines Reibbelags (3) zusammenhängt.

4. Vorrichtung nach einem der vorhergehenden Ansprüche, **dadurch gekennzeichnet, dass** das Material des Reibbelags (3) des Bremsklotzes (2) einen Zusatz eines körnigen oder pulverförmigen elektrisch leitenden Bestandteils (C) wie etwa Kupfer oder Ruß umfasst.

5. Vorrichtung nach einem der Ansprüche 1 bis 3, **dadurch gekennzeichnet, dass** der Reibbelag (3) des Bremsklotzes (2) eine Verschleißanzeige (11) aufweist, die durch ein im Reibbelag (3) eingebettetes elektrisch leitendes Element gebildet ist, und dass ein körniger oder pulverförmiger elektrisch leitender Bestandteil (C) lediglich zwischen der Verschleißanzeige (11) und einem Halter (4), an dem der Reibbelag (3) befestigt ist, zum Material des Reibbelags (3) hinzugefügt ist.

6. Vorrichtung nach einem der vorhergehenden Ansprüche, **dadurch gekennzeichnet, dass** sie ein Messgerät (5), wie etwa einen Spannungsmesser, und einen elektrischen Versorgungskreis (6) aufweist, die elektrisch mit dem Reibbelag (3) des Bremsklotzes (2) und mit einem Metallelement, wie etwa der Bremsscheibe (1) oder einem Halter (4) zum Halten des Reibbelags (3), oder mit der elektrischen Masse des Fahrzeugs verbunden sind.

7. Verfahren zur Kontrolle des Anziehens einer automatischen Kraftfahrzeugfeststellbremse, mit motorisch angetriebenen Mitteln zum Andrücken mindestens eines Bremsklotzes (2) an eine an einem Rad des Fahrzeugs angebrachte Bremsscheibe (1), **dadurch gekennzeichnet, dass** es nach einer Steuerung zum Anziehen der automatischen Feststellbremse im Wesentlichen darin besteht, eine physikalische Eigenschaft des Bremsklotzes zu messen, die sich in Abhängigkeit von der Kraft des Andrückens dieses Bremsklotzes an die Bremsscheibe (1) ändert, den Messwert mit einem vorgespeicherten Wert zu vergleichen und erneut das Anziehen der Feststellbremse zu steuern und/oder ein Signal zum Fahrzeugfahrer zu senden, wenn der Messwert kleiner ist als der vorgespeicherte Wert.

8. Verfahren nach Anspruch 7, **dadurch gekennzeichnet, dass** es darin besteht, die Eigenschaft des Bremsklotzes (2) zu unterschiedlichen Zeitpunkten nach einer Steuerung zum Anziehen der Feststellbremse zu messen, gemessene Werte mit entsprechenden vorgespeicherten Werten zu vergleichen und erneut das Anziehen der Feststellbremse zu steuern, wenn zumindest einer der gemessenen Werte kleiner ist als der entsprechende vorgespeicherte Wert.

9. Verfahren nach Anspruch 8, **dadurch gekennzeichnet, dass** es darin besteht, einen anfänglichen Wert der Eigenschaft vor dem Anziehen der Feststellbremse, einen weiteren Wert dieser Eigenschaft während des Anziehens der Bremse mit motorisch angetriebenen Mitteln zum Anziehen und einen weiteren Wert dieser Eigenschaft nach der mechanischen Blockierung der Bremse und der Rückstellung der Mittel zum Anziehen in die Ruhestellung zu messen.

10. Verfahren nach Anspruch 9, **dadurch gekennzeichnet, dass** es ferner einen nachträglichen Schritt zur Messung der Eigenschaft beim Abkühlen der Bremse umfasst.

11. Verfahren nach Anspruch 8, 9 oder 10, **dadurch gekennzeichnet, dass** es darin besteht, Unterschiede und/oder Verhältnisse der gemessenen Werte der Eigenschaft mit Unterschieden und/oder Verhältnissen der entsprechenden vorgespeicherten Werte zu vergleichen.

12. Verfahren nach einem der Ansprüche 8 bis 11, **dadurch gekennzeichnet, dass** es darin besteht, eine elektrische Größe zu messen, die mit der elektrischen Leitfähigkeit oder dem spezifischen elektrischen Widerstand des Bremsklotzes (2) oder seines Reibbelags (3) zusammenhängt.
